# EUROPEAN PATENT APPLICATION

(11) **EP 3 460 916 A1**
(43) Date of publication of application: **27.03.2019**
(21) Application number: 18195706.9
(22) Date of filing: 20.09.2018
(51) Int. Cl.: H01R 4/20, H01R 4/18, H01R 9/03, H01R 13/6592, H01R 43/048, H01R 105/00, H01R 24/40

(54) **ELECTRICAL CONTACT DEVICE, ELECTRICAL CONNECTING UNIT AND METHOD FOR ASSEMBLING AN ELECTRICAL CABLE**

(30) Priority: 22.09.2017 DE 102017122048
(71) Applicant: TE Connectivity Germany GmbH, 64625 Bensheim (DE)
(72) Inventor: BERGNER, Bert, 64625 Bensheim (DE); MANDEL, Christian, 64291 Darmstadt (DE); BLUEMMEL, Uwe, 69502 Hemsbach (DE); KUMAR, Rajesh, 60598 Frankfurt am Main (DE)
(74) Representative: Patentanwaltskanzlei WILHELM & BECK

(57) **Abstract**

The invention relates to an electrical contact device (300), in particular to a twin-axial contact device (300), preferably a ferrule or a shield contact sleeve (300), for an electrical cable (50), in particular a twin-axial cable (50), for the automotive industry, comprising or having an open crimping section (301, 303), wherein, in a crimped state of the contact device (300) at/on the cable (50), a cross-section (301, 303) which is closed and oval in cross-sections is installed at/on the cable (50) by means of the crimping section (301, 303).

The invention furthermore relates to a method for assembling an electrical cable (50), in particular a twin-axial cable (50), for the automotive industry, wherein, when assembling the cable (50), an open crimping section (301, 303) of an electrical contact device (300) or an electrical connecting unit (10) at/on the cable (50) is transformed into a closed crimping section (301, 303) at/on the cable (50), wherein, when transforming the open crimping section (301, 303) into the closed crimping section (301, 303), a crimping section (301, 303) which is oval in cross-sections and closed is installed at/on the cable (50).

## Description

The invention relates to an electrical contact device, in particular a twin-axial contact device, preferably a ferrule or a shield contact sleeve; an electrical connecting unit, in particular a twin-axial connecting unit; an electrical connector, in particular a mini connector; each for an electrical cable, in particular a twin-axial cable, preferably for the automotive industry; a method for assembling an electrical cable, in particular a twin-axial cable; an assembled electrical cable, in particular an assembled twin-axial cable; and a unit, a module, an appliance, an apparatus, an installation or a system; preferably each for the automotive industry.

In the electrical industry (electronics, electrical engineering, electrics, electrical power engineering, etc.), a large number of electrical connector devices or respectively connector units, socket and/or peg connectors, etc. - designated below as (electrical) (counter-) connectors, - are known, which serve to transmit electrical currents, voltages, signals and/or data with a large range of currents, voltages, frequencies and/or data rates. In the low, medium or high voltage and/or current ranges, and especially in the motor-vehicle industry, such connectors must ensure permanently, repeatedly and/or, after a comparatively long service life, without delay, a transmission of electrical power, signals and/or data in warm, possibly hot, polluted, humid and/or chemically aggressive environments. Due to a wide range of applications, a large number of specially configured connectors are well-known.

Such connectors or rather their housings can be installed at an electrical cable, a wire, a cable harness, etc. (assembled electrical cable); or an electrical unit or device, such as at/in a housing, at/on a leadframe, at/on a printed circuit board etc., of a (power-) electrical, electro-optical or electronic component or such equipment etc. If a connector is located at a cable, a wire or a cable harness, respectively, this is also known as a (flying) (plug) connector or a plug or a coupling; if it is located at/in an electrical, electro-optical or electronic component, then this is also known as a (counter-) connector unit such as a (built-in) connector, a (built-in) plug or a (built-in) socket. Furthermore, a connector at such a unit is often also called a (plug) receptacle or header.

The electrical connectors must ensure perfect transmission of electrical signals (voltage) and/or electrical power, wherein connectors corresponding with one another (connectors and counter-connectors) usually have fastening or locking arrangements for long-term but usually releasable fastening or locking of the connector at/in the counter-connector. Furthermore, an electrical connecting unit, e.g. having or comprising an actual contact device (usually formed integrally, e.g. a contact element, a ferrule, a terminal, a shield contact sleeve etc.) or a contact unit (usually formed in multiple parts, in two parts, in one piece, materially in one piece or integrally), must be received securely therein. In an assembled cable, such a connecting unit can be provided as a connector, i.e. without a housing, e.g. flying. Since the housings of the connectors are usually subject to a certain standardisation, such as, for example, the FAKRA standard or a different standard, the most important dimensions of the housings have the same dimensions across different manufacturers.

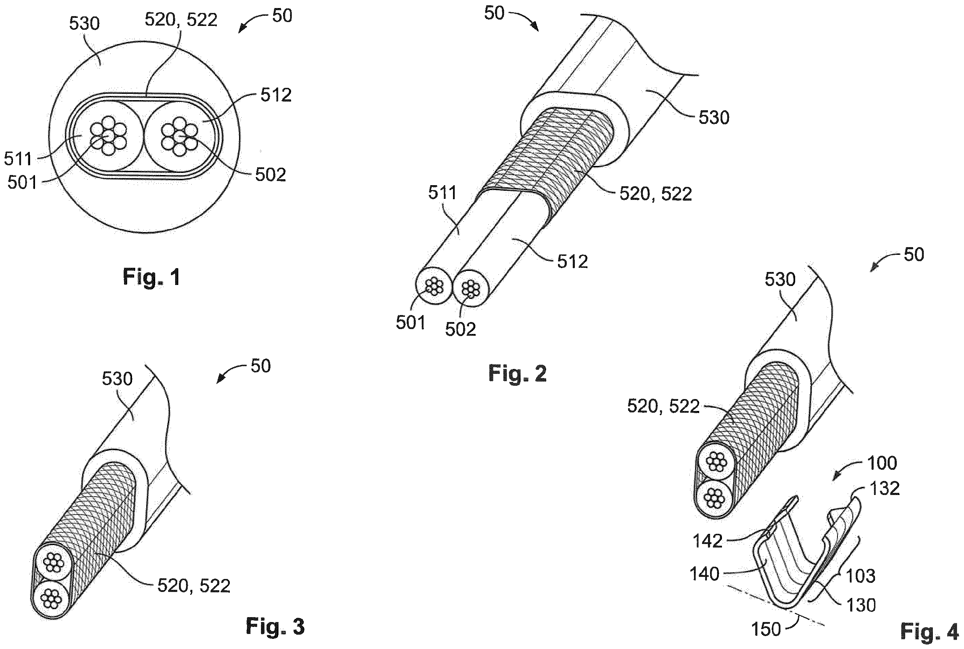

Continuous efforts are being made to improve electrical contact devices, contact units, connecting units, connectors and/or assembled cables (also: cable harnesses), in particular to make them smaller, make them more cost-effective and/or produce them more cost-effectively. Electromagnetically shielded twin-axial cables for a high-speed differential signal transmission deviate from a circular cross-sectional geometry which is typical for cables and possess an at least partially oval, for example elliptical, cross-sectional geometry. In this case, two electrical inner conductors (signal) of the twin-axial cable are surrounded by an electrical outer conductor (electro-magnetic shield for the inner conductor), e.g. a shielded film. Either the shield (cf. Fig. 1) or an entire cross-sectional geometry (cf. Figs. 2 to 11) of the twin-axial cable possesses an oval shape (plane, rounded and preferably completely convex cross-sectional geometry of the twin-axial cable).

In order to obtain a small plug connection, an electromechanical interface of an electrical connecting unit (contact device, contact unit, etc.) for the twin-axial cable also assumes an oval cross-sectional geometry. A cross-sectional geometry of a crimping section for a contact device (ferrule, terminal, shield contact sleeve, etc.) of a cable has a circular cross-section in the prior art. Typical contact devices for crimping for twin-axial cables also possess a circular cross-sectional geometry in a crimping section. A shield contact sleeve for a twin-axial cable which results therefrom, for example, therefore requires a transition from oval (electrical contact section) to circular and optionally back to oval (outer conductor crimping section).

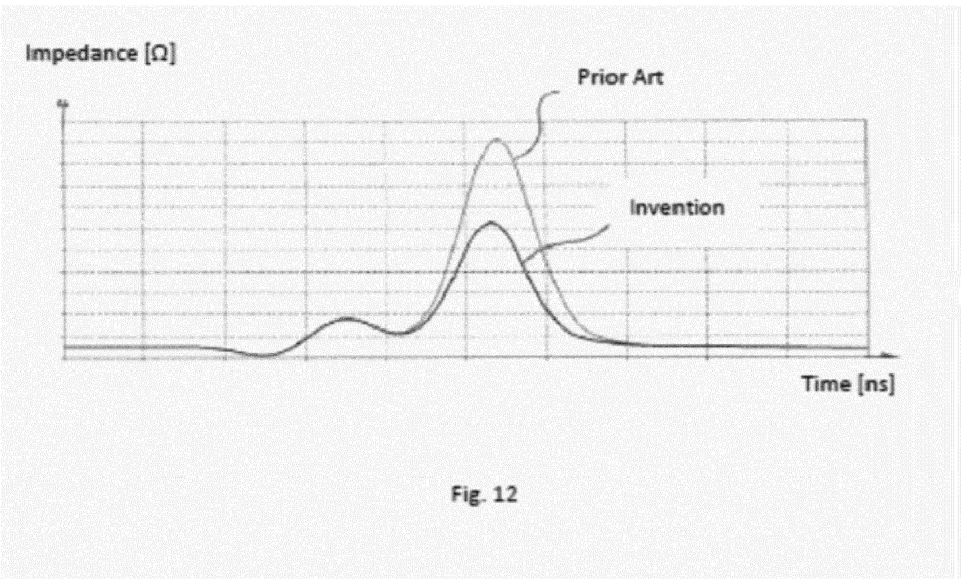

Such a transition is located at a critical point in a plug connector, where a comparatively narrow distance of the inner conductor of the twin-axial cable transitions into a wider division of the contact devices or contact units of the plug connector. Such a transition leads to a barely compensatable discontinuity (cf. Fig. 12, upper curve, prior art) in the impedance, which delimits a maximum usable frequency of such a plug connector, in particular in the full duplex mode of a related twin-axial cable. A problem of the invention is therefore to propose an improved electrical contact device and/or an improved electrical connecting unit.

In particular, it is a problem of the invention to propose an improved twin-axial connecting unit (twin-axial contact device, twin-axial contact unit, etc.), preferably an improved mini twin-axial connecting unit. In this case, the twin-axial connecting unit and a connector optionally associated therewith (also: counter-connector) should be constructed to be small, formed simply and/or be simple to handle, wherein an appropriate manufacture and also an appropriate subsequent mounting should be inexpensive. Furthermore, a problem of the invention is to provide a method for assembling an electrical twin-axial cable. In this case, the method should be able to be realised efficiently with flexible process control, for example optionally also for an operator.

The problem of the invention is solved in accordance with the independent claims by means of an electrical contact device, in particular a twin-axial contact device, preferably a ferrule or a shield contact sleeve; by means of an electrical connecting unit, in particular a twin-axial connecting unit; by means of an electrical connector, in particular a mini connector; each for an electrical cable, in particular a twin-axial cable, preferably for the automotive industry; by a method for assembling an electrical cable, in particular a twin-axial cable; by means of an assembled electrical cable, in particular an assembled twin-axial cable; and a unit, a module, an appliance, an apparatus, an installation or a system; preferably each for the automotive industry. Advantageous further developments, additional features and/or advantages of the invention will be evident from the dependent claims and the following description.

The inventive contact device comprises an open crimping section (for example as a ferrule) or has an open crimping section (for example the shield contact sleeve), wherein, in a crimped state of the contact device at/on the cable, by means of the crimping section, a crimping section which is closed and oval in cross-sections, e.g. a crimping section which is primarily or substantially elliptical in cross-sections, is installed at/on the cable. An oval cross-section is intended to mean that the cross-section possesses a level, rounded and primarily or substantially completely convex shape, a circular shape and a loop being ruled out. This means that the cross-section is approximately, primarily or substantially formed as two-dimensionally "egg-shaped" or elliptical. The cable can, for example, be formed as a copper cable and/or an aluminium cable.

In an embodiment, in the crimped state of the contact device and in a radial plane of the crimping section, in the circumferential direction of the crimping section, the diameters of the crimping section can substantially continuously vary between a comparatively small diameter and a comparatively large diameter. For this purpose, the adjectives 'small' and 'large' are intended to be related to one another (comparatively).

Circumferential edge sections, which are related to one another, of the crimping section can be formed in a substantially complementary or substantially form-fitting manner relative to one another. The crimping section can further be substantially constituted by one single curved wall. In addition, the crimp flanks of the crimping section can be formed substantially closed. Moreover, in the crimped state of the contact device, a crimp slit can be formed in a substantially light-tight manner between crimp flanks, related to one another, in the axial direction of the contact device. Furthermore, in the crimped state of the contact device, the crimp slit can be extension-free only in a circumferential direction of the contact device.

In one embodiment, the contact device can be formed as a ferrule. In this case, the ferrule can be substantially constituted as one single crimping section which can be provided at/on the cable. Furthermore, the crimping section can be installed, at/on the cable, in the crimped state as a closed and, in substantially all cross-sections, oval crimping section. In addition, substantially an entire longitudinal extension of the ferrule can be provided at/on the cable in an axial direction of the cable. Moreover, the ferrule can possess constant inner diameters in the crimped state in an axial plane.

Furthermore, the ferrule can have one single crimp flank at one single longitudinal side. In this case, the ferrule can possess two crimp flanks which are substantially opposite one another. In embodiments, the ferrule can have a substantially u-shaped or v-shaped cross-section in a radial plane of the connecting unit and preferably be formed as a primarily or substantially simple material layer. The ferrule is preferably formed materially in one piece or integrally.

In one embodiment, the contact device can be formed as a shield contact sleeve. In this case, the shield contact sleeve can have an insulating crimping section and/or an outer conductor crimping section and a shield contact section. The insulating crimping section serves to mechanically connect the shield contact sleeve to an electrical outer insulation of the cable. Furthermore, the outer conductor crimping section serves to electromechanically connect the shield contact sleeve to an electrical outer conductor of the cable. In this case, preferably all sections of the shield contact sleeve are formed oval. The insulating crimping section and/or the outer conductor crimping section can be installed, at/on the cable, in the crimped state as a closed and, in substantially all cross-sections, oval crimping section. Moreover, the outer conductor crimping section can be formed oval in substantially all cross-sections. Furthermore, a crimp slit of the shield contact sleeve can begin with/in the outer conductor crimping section.

In addition, the open insulating crimping section and/or the open outer conductor crimping section can be formed as one single gaping insulating crimping section and/or outer conductor crimping section. Moreover, the insulating crimping section and/or the outer conductor crimping section can optionally each have two crimp flanks which are substantially opposite one another. The crimp flanks of the outer conductor crimping section are optionally attached to the shield contact section of the shield contact sleeve via a transition section. Moreover, the insulating crimping section and/or the outer conductor crimping section can have a substantially u-shaped or v-shaped cross-section in a radial plane of the connecting unit and preferably be formed as a primarily or substantially simple material layer. The shield contact sleeve is preferably formed materially in one piece or integrally.

The inventive connecting unit comprises at least one inventive contact device or has at least one inventive contact device. In this case, at least one contact device can be formed as a ferrule and/or a shield contact sleeve. In one embodiment, in a crimped state of the connecting unit, the crimp slits of two contact devices of the connecting unit can be arranged offset from one another in the circumferential direction of the connecting unit. Preferable angles are in this case approximately 90° or approximately 270° and approximately 180°, other angles of course being able to be applied. Alternatively or additionally, the crimp slits of two contact devices of the connecting unit can be arranged substantially without overlap in the radial direction of the connecting unit. This means that the crimp slits of the two contact devices substantially do not overlap in the radial direction.

In one embodiment, the connecting unit comprises the ferrule, two terminals (for example at least one pin-, peg-, tab- and/or socket contact device, etc.) and the shield contact sleeve. In this case, the two terminals can be connected to two electrical inner conductors of the cable. Furthermore, the ferrule can be provided on an electrical outer conductor of the cable and the shield contact sleeve can be provided over the ferrule. In this case, the shield contact sleeve can be provided indirectly (outer conductor of the cable moved onto the ferrule) over the ferrule or directly (outer conductor of the cable not moved onto the ferrule) on the ferrule, sitting thereon. When mounting the connecting unit at/on the cable, the shield contact sleeve can optionally latch with the ferrule, for which appropriate latching units are provided at/in the shield contact sleeve and the ferrule.

The inventive connector optionally has a connector housing, the connector comprising or having an inventive contact device or an inventive connecting unit. In this case, the contact device or the connecting unit is preferably installed in the connector housing. In the assembly method according to the invention, when assembling the cable, an open crimping section of an electrical contact device or an electrical connecting unit at/on the cable is transformed into a closed (without crimp slit) crimping section at/on the cable, wherein, when transforming the open crimping section into the closed crimping section, a crimping section which is preferably substantially oval in all cross-sections and closed is installed at/on the cable.

In one embodiment of the assembly method, in a first step of the method, a ferrule which is oval in preferably substantially all cross-sections can be electromechanically fixed on an electrical outer conductor. The first step of the method is optional, i.e. the feature of the ferrule can be omitted, which also applies to all other embodiments of the invention (see above). In a second step of the method temporally optionally following the first step, at least one terminal can be electromechanically fixed at at least one electrical inner conductor of the cable. This step can also be optional, where applicable.

In a third step of the method temporally following the optional second step, a shield contact sleeve can be mechanically and/or electromechanically fixed at/on the cable. This step can again also be optional. Additionally or alternatively, in the third step of the method, an insulating crimping section which is oval in preferably substantially all cross-sections and/or an outer conductor crimping section, which is oval in preferably substantially all cross-sections, of the shield contact sleeve can be formed.

For example, in the first step, the cable is freed at a longitudinal end section from an outer insulation and inserted, into the ferrule, with a section which is freed from the outer insulation of the cable, and/or vice versa (substep I.1). Following on chronologically, the ferrule is plastically deformed when it is mounted on the outer conductor, i.e. crimped into an oval (substep I.2). Following on chronologically, a free longitudinal end section of the outer conductor can be moved outwardly onto the ferrule (substep I.3). Furthermore, following on chronologically, a remaining free longitudinal end section of the cable can again be freed from at least one inner insulation of the cable (substep I.4).

In a second step, the cable can be freed from at least one inner insulation at at least one longitudinal end section (substep II.1), this substep II.1 being able to coincide with substep I.4. Following on chronologically, the terminal is joined to an inner conductor of the cable (substep II.2), which can take place by a crimping method, for example. A soldering, welding or adhesive method can alternatively be used, for example. Following on chronologically (substep II.3), a dielectric of the connecting unit can optionally be provided at/on the cable. It is also possible to provide the dielectric at/on the cable in one of the subsequent substeps or between two of the subsequent substeps.

In a third step, a crimp flank of the shield contact sleeve can firstly be pre-curved or pre-rolled (substep III.1a), which preferably then takes place if the shield contact sleeve is still located at a carrier strip. This substep is optional. Following on chronologically, the shield contact sleeve, optionally still at the carrier strip, can be fitted with a subassembly made from the cable with the ferrule and the at least one terminal (substep III.1b). Following on chronologically, the shield contact sleeve can again optionally be separated from the carrier strip (substep III.2), and the shield contact sleeve can then be crimped at/on the subassembly made from cable, ferrule and at least one terminal (substep 111.3).

In one embodiment, a crimp slit of the oval ferrule and a crimp slit of the oval outer conductor crimping section can be arranged offset from one another in the circumferential direction of the connecting unit. Furthermore, the crimp slit of the oval ferrule and the crimp slit of the oval outer conductor crimping section can be arranged offset from one another by approximately 90° or approximately 180°. Other angles can in turn of course be used. Additionally or alternatively, the contact device or the connecting unit can be formed as an inventive contact device or an inventive connecting unit.

The inventive assembled cable has an electrical cable and an electrical connecting unit at least partially joined thereto, an oval ferrule of the connecting unit being fixedly connected to an electrical outer conductor of the cable in an electromechanical manner, and a shield contact sleeve of the connecting unit being fixedly connected to the cable in a mechanical and/or electromechanical manner by means of an oval crimping section.

Furthermore, at least one terminal of the connecting unit can be fixedly connected to an electrical inner conductor of the cable in an electromechanical manner. When assembling the cable, the shield contact sleeve can have at least one open or pre-rolled crimp flank. Furthermore, the shield contact sleeve with the at least one open or pre-rolled crimp flank can be pushed over the ferrule. In a crimped state of the shield contact sleeve on/at the cable, the shield contact sleeve can be latched with the ferrule.

In one embodiment, the assembled cable can be formed as a pre-assembled cable. Furthermore, a shield contact sleeve can be associated with the pre-assembled cable. Moreover, the connecting unit or a contact device of the connecting unit can be formed according to the invention. In addition, the assembled cable can be produced by an assembly method according to the invention.

The inventive unit, the inventive module, the inventive appliance, the inventive apparatus, the inventive installation or the inventive system has an inventive contact device, an inventive connecting unit, an inventive connector and/or an inventive assembled electrical cable. Additionally or alternatively, the unit, the module, the appliance, the apparatus, the installation or the system can have an assembled electrical cable which is produced by an assembly method according to the invention.

In a contact device or a connecting unit, the invention enables a transition from oval to circular and optionally back to oval to be completely avoided and therefore improves a frequency performance of a connector by a significant amount (cf. Fig. 12, bottom curve, invention). Simulations have shown an improvement of approximately 50% (i.e. from 6 GHz to 9 GHz) simply by applying the invention. It is further advantageous that an installation space for a connecting unit, a connector housing, a connector and thus for an electrical connection can be reduced.

The invention is explained in greater detail below using exemplary embodiments with reference to the attached schematic drawings, which are not true to scale. Sections, elements, structural parts, units, diagrams and/or components which possess an identical, univocal or similar design and/or function are identified by the same reference numbers in the description of the figures (see below), the list of reference numbers, the claims and in the figures (Figs.) of the drawings. A possible alternative, a steady-state and/or kinematic reversal, a combination, etc., which is not explained in the description of the invention (see above) and which is not illustrated in the drawings and/or is inconclusive, to the exemplary embodiments of the invention or a component, a diagram, a unit, a structural part, an element or a section thereof, can further be inferred from the list of reference numbers and/or the description of the figures.

In the invention, a feature (section, element, structural part, unit, component, function, variable etc.) can be configured to be positive, i.e. present, or negative, i.e. absent, with a negative feature not being explicitly explained as a feature if the fact that it is absent is not deemed to be significant according to the invention. A feature of this specification (description, list of reference numbers, claims, drawings) can be applied not only in a specified manner but rather can also be applied in a different manner (isolation, summary, replacement, addition, uniqueness, omission, etc.). In particular, by using a reference number and an associated feature, or vice versa, in the description, the list of reference numbers, the claims and/or the drawings, it is possible to replace, add or omit a feature in the claims and/or the description. Moreover, a feature in a claim can be explained and/or specified in greater detail as a result.

The features of this specification can (in view of the (largely unknown) prior art) also be interpreted as optional features; i.e. every feature can be understood as an optional, arbitrary or preferred feature, i.e. as a non-binding feature. It is thus possible to detach a feature, optionally including its periphery, from an exemplary embodiment, with this feature then being transferable to a generalised inventive concept. The lack of a feature (negative feature) in an exemplary embodiment shows that the feature is optional with regard to the invention. Furthermore, in the case of a type term for a feature, a generic term for the feature can also be read alongside this, (optionally further hierarchical classification into subgenus, section, etc.), as a result of which it is possible to generalise a or this feature, e.g. taking into account identical effect and/or equivalence. In the figures, which are merely exemplary:
- Fig. 1: shows a two-dimensional cross-section of a first embodiment of a twin-axial cable with circular outer geometry and oval inner geometry to its electromagnetic shield of its two inner conductors,
- Fig. 2: shows a perspective depiction, which is broken away rearwards, of a second embodiment of a twin-axial cable with oval outer geometry and oval inner geometry to its electromagnetic shield of its two inner conductors,
- Fig. 3: shows a perspective depiction obliquely from above of a longitudinal end section, without an electrical outer insulation, of the second embodiment of the twin-axial cable, which is depicted broken away rearwards,
- Fig. 4: shows a perspective depiction similar to Fig. 3, wherein an inventive ferrule is provided at/on a rear section of the longitudinal end section, without the outer insulation, of the twin-axial cable, and/or vice versa,
- Fig. 5: shows a two-dimensional cross-section through two crimping tools, depicted in an oversimplified manner, when producing a crimp connection between the ferrule and the rear section of the longitudinal end section of the twin-axial cable,
- Fig. 6: shows a perspective depiction similar to Fig. 4, wherein the ferrule is provided fixedly at/on the rear section of the longitudinal end section of the twin-axial cable, and a remaining free longitudinal end section of the twin-axial cable protrudes from the ferrule,
- Fig. 7: shows a perspective depiction similar to Fig. 6, wherein a remaining free longitudinal end section of an outer conductor of the twin-axial cable has been moved onto the ferrule and two electrically insulated inner conductors of the twin-axial cable protrude therefrom,
- Fig. 8: shows a perspective depiction similar to Fig. 7, wherein, when omitting a crimping method for two terminals, an inventive shield contact sleeve (depicted broken away in front) is provided at/on the free longitudinal end section of the twin-axial cable,
- Fig. 9: shows a perspective depiction similar to Fig. 8, wherein the inventive shield contact sleeve from Fig. 8 is provided at/on a free longitudinal end section of the twin-axial cable by a crimp connection to the twin-axial cable,

- Fig. 10: shows a two-dimensional cross-sectional view of an inventive assembled electrical twin-axial cable, wherein the connecting unit thereof is depicted in a region of its ferrule and of an outer conductor crimping section of its shield contact sleeve,
- Fig. 11: shows a perspective central sectional view of an inventive electrical plug connection having an inventive connecting unit as a connector and a counter-connector mated therewith having a counter-connector housing,
- Fig. 12: shows impedance profiles of two electrical plug connections, wherein the upper curve represents a plug connection according to the prior art and the bottom curve represents a plug connection with an inventive shield contact sleeve.

The invention is explained is more detail below, firstly in general and then by way of exemplary embodiments of an embodiment of a variant of an electrical twin-axial connecting unit 10, in particular a mini twin-axial connecting unit 10, having four electrical contact devices 100, 200, 200, 300 for the automotive industry. Furthermore, the invention is explained in greater detail using exemplary embodiments of an embodiment of a variant of an assembly method for an electrical twin-axial cable 50. Only those spatial sections of a subject-matter of the invention which are necessary for understanding the invention are illustrated in the drawings.

Although the invention is more closely described and illustrated in more detail by preferred exemplary embodiments, the invention is not restricted by the disclosed exemplary embodiments, but instead is of a more fundamental nature. Other variations can be derived herefrom and/or from the above (description of the invention) without departing from the scope of protection of the invention. The invention can therefore be applied to other connectors, connecting units, contact devices or cables (cable harness) in the automotive industry or outside of the automotive industry, such as in an electronics, electrical engineering or power engineering industry, etc. In this case, the invention can be applied, for example, to connecting units, contact devices or cables in the computer and (consumer) electronics industry.

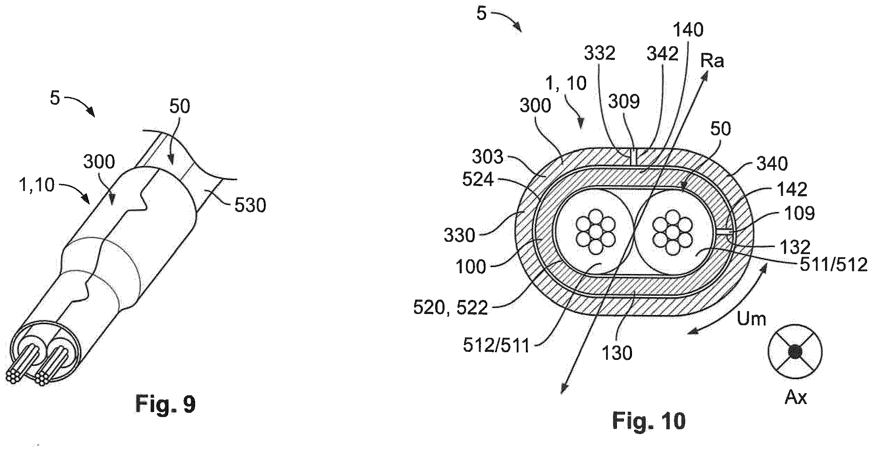

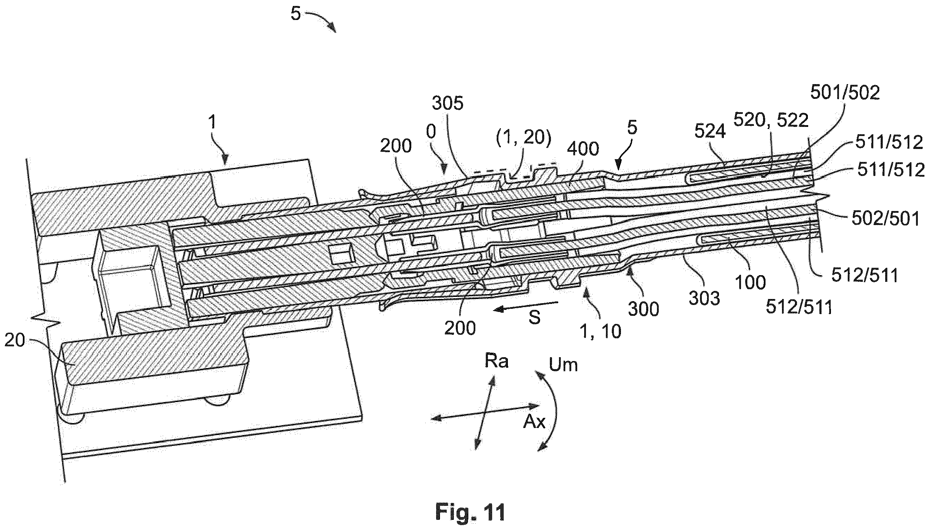

Furthermore, the terminology, connector and counter-connector, connecting unit and counter-connecting unit, pin-/peg-/tab contact device and socket contact device must be interpreted as synonymous, i.e. optionally interchangeable with one another respectively. The explanation of the invention, using the drawings, is subsequently related to an axial or longitudinal direction Ax (longitudinal axis Ax, axial plane Ax, also plug-in direction S), a radial direction Ra (radial plane Ra) and a circumferential direction Um (tangent plane Um) of an inventive electrical (plug) connection 0, of an inventive electrical connector 1, of a connector housing 20, of the connecting unit 10, of the twin-axial cable 50, etc. (cf. Figs. 10 and 11).

In this case, the (plug) connection 0 can have a connector 1 (connecting unit 10 and connector housing 20 (depicted dashed in Fig. 11) or a connecting unit 10 as a connector (actual Fig. 11) and a counter-connector, wherein the counter-connector can be formed as an inventive connector (connecting unit and connector housing, or connecting unit as a connector). According to the FAKRA standard (FAKRA = expert group on automobiles), in particular for an RF or HF plug connection 0 (RF: radio frequency, HF: high frequency), the connector 1 for the twin-axial cable 50 can, for example, be formed as pin-, peg-, tab-, socket-, hybrid (plug) connector, (flying) coupling, (built in) plug, (built in) socket, plug receptacle, socket receptacle, header, interface, etc.

In general, the invention proposes a contact device (100, 300; cf. Figs. 4, 6, 8 and 10, for example) with a crimping section (103; 301, 303), wherein the crimping section (103; 301, 303), at least in a crimped state (i.e. closed crimping section (103; 301, 303)) of the contact device (100, 300) at/on the cable (50), in particular at/on the twin-axial cable (50), possesses a geometry or shape which is oval in cross-sections, i.e. at least in sections. Substantially the entire closed crimping section (103; 301, 303) preferably possesses an oval geometry or shape in substantially all its cross-sections.

In this case, the contact device (100) can be substantially formed as (comprise) the crimping section (ferrule 103) or the contact device (300) can have a single crimping section (301/303) or the crimping sections (insulating crimping section 301, outer conductor crimping section 303). The crimping section (103; 301, 303) can be formed in an open state (non-crimped state) in sections as a thin oval ring section or even in sections as a thin circular ring section. A cross-section of the entire open crimping section (103; 301, 303) can here be formed u-shaped or v-shaped. In this case, the two outer lateral limbs (i.e. left and right: u, v) are formed either comparatively long or comparatively short in comparison with a connecting section of this lateral limb (below).

Figs. 1 and 2 each show an electrical twin-axial cable 50 at which, in each case, an inventive electrical connecting unit 10 (cf. Figs. 10 and 11) is crimpable. The twin-axial cable 50 comprises (from the inside) a first electrical inner conductor 501 which is surrounded by a first inner insulation 511 or a first dielectric 511, and a second electrical inner conductor 502 which is surrounded by a second inner insulation 512 or a second dielectric 512. The two inner conductors 501, 502 (signal) are installed side-by-side, in particular parallel to one another, in the twin-axial cable 50 and each comprise, for example, a strand or wire made from aluminium or copper.

The two inner insulations 511, 512 are preferably closely surrounded, i.e. with a low tolerance, by an electrically conductive or electrically insulating film 520 and/or an electrical outer conductor 522 as an electro-magnetic shield 522 (e.g. shield conductor 522, braid wire 522, braid line 522). The outer conductor 522 preferably has aluminium or copper. An outer insulation 530 of the twin-axial cable 50 is located radially Ra outside the film 520 and/or the outer conductor 522.

The connecting unit 10 here has a single ferrule 100 (contact device 100), two terminals 200, 200 (contact devices 200, 200) and a shield contact sleeve 300 (contact device 300). Between the two terminals 200, 200 and the shield contact sleeve 300, an electrical insulation 400 or a dielectric 400 is located which can be formed in multiple parts, in two parts, in one piece, materially in one piece or integrally. It is of course possible to constitute such a connecting unit 10 solely by a single ferrule 100, a single contact device 100/300 or otherwise (see above) by one or a plurality of contact devices.

The contact device 100 as a ferrule 100 (cf. Fig. 4) is in this case formed as a (first) electrical (mini) twin-axial contact device 100. In this case, the ferrule 100 is formed open or partially closed, for example gaping, in the circumferential direction Um prior to mounting. The ferrule 100 is preferably totally plastically deformable, i.e. crimpable (crimp sleeve 100), and preferably formed in one piece, materially in one piece or integrally. In this case, the ferrule 100 can be formed as only one single mounting section 100 in the axial direction Ax. The ferrule 100 can also be described, for example, as a press clamp 100, pressure sleeve 100, clamping ring 100, ring fitting 100 or netting end-sleeve 100 (each having a crimp slit 109, see below).

The contact device 200 as a terminal 200 (cf. Fig. 11) is in this case formed as a (second) electrical (mini) twin-axial contact device 200. In this case, the terminal 200 is preferably partially plastically deformable, i.e. crimpable (terminal 200 formed partially as a crimp sleeve) and preferably formed in one piece, materially in one piece or integrally. It is of course possible to use a non-crimpable terminal 200 which, for example, can be adhered, soldered, welded, etc. The terminal 200 can be formed as a pin-, peg-, tab-, socket contact device (cf. Fig. 11), etc.

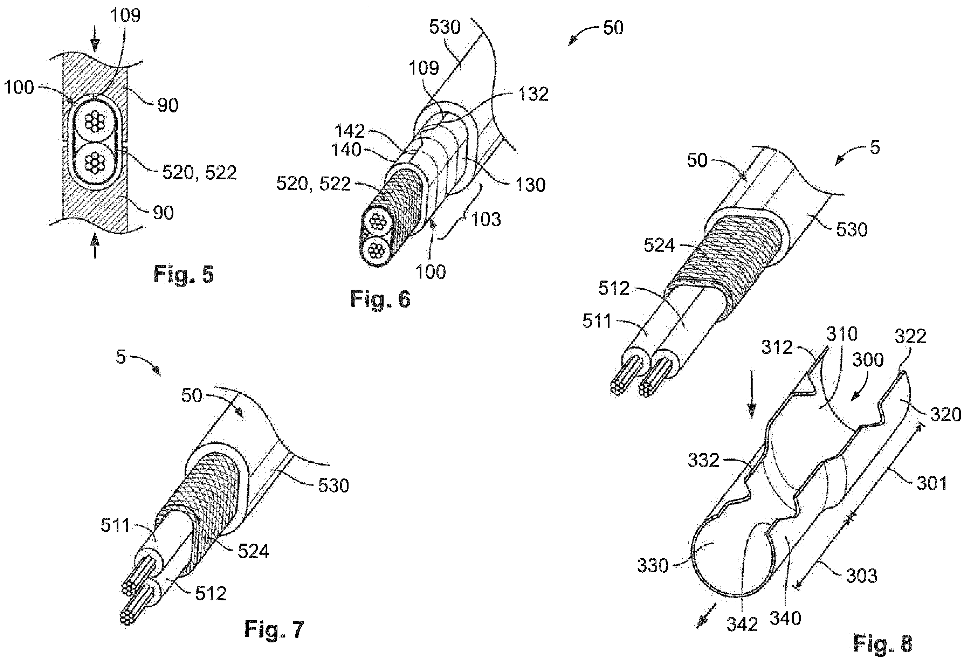

The contact device 300 as a shield contact sleeve 300 (cf. Fig. 8), which can be described for example also as an impedance contact sleeve 300, is in this case formed as a (third) electrical (mini) twin-axial contact device 300. In this case, the shield contact sleeve 300 is preferably partially plastically deformable, i.e. crimpable (shield contact sleeve 300 formed partially as a crimp sleeve 301, 303), and preferably formed in one piece, materially in one piece or integrally. The shield contact sleeve 300 is divided in this case into an insulating crimping section 301, an outer conductor crimping section 303 and an electrical shield contact section 305 for electrical contact with a shield contact section of a counter-connector.

Using Figs. 3 to 10, a construction and a substantially three-stage (steps I, II and III) method for assembling the twin-axial cable 50 from Figs. 1 or 2 with an inventive connecting unit 100 are hereinafter explained in greater detail. In this case, Figs. 3 to 7 illustrate the first step I of the method which relates to mounting the ferrule 100 with up to four or more substeps (I.1 to I.4), a twin-axial cable 5 described as a pre-assembled twin-axial cable 5 being obtained at the end of the first step I. The second step II and the result thereof (pre-assembled twin-axial cable 5 with two terminals 200) is not depicted in the drawings, apart from a general depiction of the invention in Fig. 11. Figs. 8 and 9 depict the third step III (up to two or more substeps III.1, III.2) of the assembly method (result: fully assembled twin-axial cable 5).

In the (first) substep I.1 depicted in Fig. 3, the twin-axial cable 50 is freed (stripped) from the outer insulation 530 at its free longitudinal end section and thus a longitudinal end section of the outer conductor 522 is exposed. Following on chronologically (Figs. 4 to 6), the ferrule 100 is fastened, in particular crimped ((second) substep I.2), to a rear section of the free outer conductor 522, the crimped state of the ferrule 100 at/on the twin-axial cable 50 being depicted in Fig. 6.

In this case, which is preferable, the rear section of this free outer conductor 522 is inserted into a related ferrule 100, which is located at a carrier strip 150 (dashed in Fig. 4) for ferrules, and, following on chronologically, this ferrule is crimped (substep I.2). The ferrule 100 can then be separated from the carrier strip 150. It is also possible to firstly separate the ferrule 100 from the carrier strip 150, then to move the ferrule 100 onto the rear section of the free outer conductor 522 and then crimp it thereon. A hybrid type is also possible when combining the ferrule 100 with the twin-axial cable 50, the ferrule 100 and the rear section of the free outer conductor 522 moving towards one another.

In this case, prior to its mounting in a circumferential direction Um of the connecting unit 100 or the ferrule 100, the plastically deformable and in particular integral ferrule 100 is preferably formed completely open in the axial direction Ax and has two mounting mechanisms 130, 140 which are formed as crimp flanks 130, 140. Each crimp flank 130, 140 has a circumferential edge section 132, 142. The two circumferential edge sections 132, 142 which are related to one another are preferably formed substantially complementary or substantially in a form-fitting manner with one another such that, in the crimped state of the ferrule 100, a crimp slit 109 is formed in a substantially light-tight manner between the crimp flanks 130, 140 of the mounted ferrule 100 in the axial direction Ax of the connecting unit 100 or the ferrule 100 (cf. Fig. 6).

Furthermore, when plastically deforming the substantially entire ferrule 100, at least one latching unit, in particular a latching projection, can be formed at/in the ferrule 100. Furthermore, alternatively or additionally, when plastically deforming the ferrule 100, at least one other unit, such as a ribbing or another structure, can be installed at/in the ferrule 100. This can result in an improved electrical contact behaviour between the ferrule 100 and an end section 524 (Fig. 7), providable externally thereon, of the outer conductor 522 and/or of the shield contact sleeve 300, wherein optionally also an electrically non-conductive ferrule 100 can be used.

The ferrule 100 or the crimp flanks 130, 140 are constituted as a crimping section 103, which, according to the invention, is installed at/on the twin-axial cable 50 in the crimped state (Fig. 6) as a closed and, in substantially all cross-sections, oval crimping section 103. In this case, Fig. 5 shows the establishment of the crimped state of the ferrule 100 or the crimping section 103 thereof by means of two crimping tools 90, for example a crimping machine. The crimping section 103 can, already prior to crimping, have an approximately oval cross-sectional geometry or can obtain it only during crimping.

In an optional (third) substep 1.3 depicted in Fig. 6 to Fig. 7, a free end section 524, which still protrudes under the ferrule 100, of the outer conductor 522 is preferably moved externally onto the ferrule 100 (free, moved end section 524 of the outer conductor 522 with a u-shaped cross-section running around the axial axis Ax, c.f. Fig. 10). If the substep 1.3 is omitted, which is possible, it is thus preferable to make the ferrule 100 from an electrically conductive material. Furthermore, it is here preferable to allow a free end of the outer conductor 522 to substantially coincide with a free end of the ferrule 100 in an axial manner Ax.

In a (fourth) substep I.4 which is not depicted, two free longitudinal end sections, which protrude at a free end of the moved end section 524, of the twin-axial cable 50 are preferably stripped at their longitudinal end regions (result c.f. Fig. 7). This means that two longitudinal end sections protrude at the moved end section 524, which, starting from a free end, firstly in each case comprise a bare inner conductor 501, 502 and further back the inner conductor 501, 502 which is in each case provided with an inner insulation 511, 512. In this substep I.4, the inner conductors 501, 502 are freed from the respective inner insulation 511, 512 to such an extent that the terminals 200, 200 can be provided at the inner conductors 501, 502 and an expansion, which is not too sudden, of a gap between the inner conductors 501, 502 can take place in the connecting unit 10.

The second step II of the method is not depicted or omitted in the drawings. In the second step II, the terminals 200, 200, in this case formed as socket contact units 200, 200 (cf. Fig. 11), are provided at the inner conductors 501, 502 (longitudinal end regions). At the end of the second step II, a (pre-)assembled twin-axial cable 5 is obtained which can also be described as a subassembly, having the twin-axial cable 50 with the ferrule 100 and the terminals 200, 200.

The elongated and in particular integrally configured terminals 200, 200 each have a mounting section, for example a crimping section, at a rear end section. At a front end section, each terminal 200, 200 has an electrical contact section which in this case is designed as a socket contact section. A pin-, peg-, tab contact section, etc. can of course be used. In addition, the respective terminal 200, 200 can have a transition section between the crimping section and the contact section. Moreover, the respective terminal 200, 200 can have a latching unit preferably in the transition section for locking the respective terminal 200, 200 in place.

In the second step II, firstly a respective terminal 200, 200 is separated from a carrier strip for terminals. Subsequently, the respective crimping section is moved to the related free longitudinal end region of a related inner conductor 501, 502, or the related free longitudinal end region of the related inner conductor 501, 502 and the crimping section are moved towards one another, the related longitudinal end region of the related inner conductor 501, 502 resting in a foundation of the respective crimping section. Following on chronologically, the respective crimping section is crimped to the related inner conductor 501, 502.

This can take place in reverse, i.e. crimping the respective crimping section to the related inner conductor 501, 502, the respective terminal 200, 200 still being located at the carrier strip. A (pre-)assembled twin-axial cable 5 which arises therefrom is only then, i.e. following on chronologically, separated from the carrier strip. Instead of a crimping method, a different method can, of course, also be applied, the respective terminal 200, 200 then being configured in a correspondingly different manner (adhesive-, soldering-, welding section, etc. instead of a crimping section). Fig. 7 shows a (pre-)assembled twin-axial cable 5, but without terminals 200, 200.

Moreover, Figs. 8 to 10 illustrate the third step III of the method, the (pre-)assembled twin-axial cable 5 from Fig. 7 being further assembled. As a result of this, a (fully) assembled twin-axial cable 5 is obtained, having the twin-axial cable 50 with the ferrule 100, the terminals 200, 200 and the shield contact sleeve 300. The fully assembled twin-axial cable 5, comprising or having an electrical connector 1 (without a connector housing), can be installed such that it can be plugged onto a counter-connector 1 (Fig. 11) without further action. Alternatively, the connector 1 of the fully assembled twin-axial cable 5 can be primarily and optionally additionally secondarily latched in a connector housing 20 (optionally depicted dashed in Fig. 11).

The third step III of the assembly method relates to mounting the shield contact sleeve 300. The elongated and in particular integrally configured shield contact sleeve 300 in this case is formed as a crimp sleeve 300. In this case, at a rear end section, the shield contact sleeve 300 has a mounting section 301, in particular an insulating crimping section 301, with two mounting mechanisms 310, 320 which are opposite one another and which are formed as (insulating) crimp flanks 310, 320. In this case, the (insulating) crimp flanks 310, 320 can be formed open, gaping, curved and/or pre-rolled. Furthermore, the (insulating) crimp flanks 310, 320 can be curved or pre-rolled within the scope of the third step III.

At a front end section, the shield contact sleeve 300 has a shield contact section 305 (only Fig. 11) for electrically contacting the counter-connector. Between the insulating crimping section 301 and the shield contact section 305, the shield contact sleeve 300 has a mounting section 303, in particular an outer conductor crimping section 303, with two mounting mechanisms 310, 320 which are opposite one another and which are formed as (conductor) crimp flanks 330, 340. In this case, the (conductor) crimp flanks 330, 340 can be formed open, gaping, curved and/or pre-rolled. The (conductor) crimp flanks 330, 340 of the outer conductor crimping section 303 preferably transition into the (insulating) crimp flanks 310, 320 of the insulating crimping section 301 or vice versa.

Preferably only the insulating crimping section 301 and the outer conductor crimping section 303 of the shield contact sleeve 300 are at least partially plastically deformable. In this case, preferably only four crimp flanks 310, 320, 330, 340 are provided. Each crimp flank 310, 320, 330, 340 preferably has a circumferential edge section 312, 322, 332, 342, wherein circumferential edge sections 312, 322; 332, 342 which are related to one another are formed preferably in a substantially complementary or substantially form-fitting manner with one another such that a crimp slit 309 can be formed in a substantially light-tight manner between the crimp flanks 310, 320, 330, 340 of the mounted shield contact sleeve 300 in the axial direction Ax of the shield contact sleeve 300 (cf. Fig. 9). The shield contact sleeve 300 is preferably formed such that a beginning of the crimp slit 309 can already be visible in a non-crimped shield contact sleeve 300 and does not arise only during crimping.

The shield contact sleeve 300 can have a transition section between the shield contact section 305 and the outer conductor crimping section 303, which is preferably configured sleeve-shaped. Moreover, the shield contact sleeve 300 can have a latching unit, in particular in its outer conductor crimping section 303, for locking the ferrule 100 in place. Moreover, a dielectric 400 can be provided or installed inside the shield contact sleeve 300. The dielectric 400 serves for electrical insulation of the shield contact sleeve 300 relative to the terminals 200, 200 and further preferably for bearing and/or centering the terminals 200, 200 in the shield contact sleeve 300 and thus in the connecting unit 10.

The third step III of the assembly method is explained in greater detail hereinafter. In a (first) substep III.1, a shield contact sleeve 300 with originally formed, (pre-)curved and/or pre-rolled crimp flanks 310, 320, 330, 340 and a (pre-)assembled twin-axial cable 5 obtained from the second step II or the subassembly are paired, wherein the shield contact sleeve 300 can remain at a carrier strip for second contact devices 300. If crimp flanks are (pre-)curved or pre-rolled, it is preferable that only the insulating crimp flanks 310, 320 are pre-curved or pre-rolled. This means that a related free (pre-)assembled longitudinal end section of the twin-axial cable 50 is moved from behind into the related shield contact sleeve 300.

In a subsequent (second) substep III.2, the crimp flanks 310, 320, 330, 340 are preferably completely closed in a crimping machine, i.e. crimped, the ferrule 100 being able to latch with the shield contact sleeve 300. In this case, the crimping section 301, 303 locks the shield contact sleeve 300 in place, preferably both on the twin-axial cable 50 or the outer insulation 530 thereof and on/over the ferrule 100 or on the moved end section 524 of the outer conductor 522. The shield contact sleeve 300 can now be removed from the carrier strip. It is, of course, possible to firstly remove the shield contact sleeve 300 from the carrier strip, then pair it with the (pre-)assembled twin-axial cable 5 or the subassembly and crimp it following on chronologically.

The shield contact sleeve 300 is partially constituted as a crimping section 301, 303 or has two crimping sections 301, 303, which, according to the invention, are installed at/on the twin-axial cable 50 (twin-axial cable according to Fig. 2) in the crimped state (Figs. 9, 10) as closed and, in substantially all cross-sections, oval crimping sections 301, 303. In this case, the insulating crimping section 301 preferably possesses larger diameters than the outer conductor crimping section 303. The respective crimping section 301, 303 can, already prior to crimping, have an approximately oval cross-sectional geometry or can only obtain it during crimping. If a twin-axial cable according to Fig. 1 is used, the insulating crimping section 301 in the crimped state thus possesses a circular geometry in substantially all cross-sections.

### List of reference numbers

- 0: Electrical (plug) connection
- 1: Electrical (mini) (twin-axial) connector
- 5: (Pre-/fully) assembled (twin-axial) cable

- 10: Electrical connecting unit
- 20: Connector housing (optional)
- 50: Electrical (twin-axial) cable
- 90: Crimping tool

- 100: (First) electrical (mini) (twin-axial) contact device (optionally connecting unit), ferrule
- 103: (Closed: oval) crimping section
- 109: (Closed) crimp slit
- 130: (First) crimp flank
- 132: Circumferential edge section
- 140: (Second) crimp flank
- 142: Circumferential edge section
- 150: Carrier strip

- 200: (Second) electrical (mini) (twin-axial) contact device (optionally connecting unit), terminal

- 300: (Second/third) electrical (mini) (twin-axial) contact device (optionally connecting unit), shield contact sleeve
- 301: (Closed: oval) (insulating) crimping section
- 303: (Closed: oval) (outer conductor) crimping section
- 305: Electrical (shield) contact section
- 309: (Closed) crimp slit in the contact device 300
- 310: (First) (insulating) crimp flank
- 312: Circumferential edge section
- 320: (Second) (insulating) crimp flank
- 322: Circumferential edge section
- 330: (First) (conductor) crimp flank
- 332: Circumferential edge section
- 340: (Second) (conductor) crimp flank
- 342: Circumferential edge section

- 400: Dielectric

- 501: (First) electrical inner conductor (signal)
- 502: (Second) electrical inner conductor (signal)
- 511: (First) inner insulation
- 512: (Second) inner insulation
- 520: Film
- 522: Electrical outer conductor (electromagnetic shield)
- 524: ((Free) moved) end section of the outer conductor 522
- 530: Outer insulation

- Ax: Axial/longitudinal direction, axial plane
- Ra: Radial direction, radial plane
- Um: Circumferential direction, tangent plane

- S: Plug-in direction of the connecting unit 10

## Claims

1. An electrical contact device (100, 300), in particular twin-axial contact device (100, 300), preferably a ferrule (100) or shield contact sleeve (300),
for an electrical cable (50), in particular a twin-axial cable (50), for the automotive industry, comprising or having an open crimping section (103; 301, 303), **characterised in that**
in a crimped state of the contact device (100, 300) at/on the cable (50), a crimping section (103; 301, 303) which is closed and oval in cross-sections is installed at/on the cable (50) by means of the crimping section (103; 301, 303).

2. The electrical contact device (100, 300) according to the preceding claim, **characterised in that**, in the crimped state of the contact device (100, 300) and in a radial plane (Ra) of the crimping section (103; 301, 303),
in the circumferential direction (Um) of the crimping section (103; 301, 303), the diameters of the crimping section (103; 301, 303) substantially continuously vary between a comparatively small diameter and a comparatively large diameter.

3. The electrical contact device (100, 300) according to any one of the preceding claims, **characterised in that**:
• circumferential edge sections (132, 142; 312, 322; 332, 342), which are related to one another, of the crimping section (103; 301, 303) are formed in a substantially complementary or substantially form-fitting manner relative to one another,
• the crimping section (103; 301, 303) is constituted substantially by one single curved wall,
• the crimp flanks (110, 120; 310, 320; 330, 340) of the crimping section (103; 301, 303) are formed substantially closed,
• in the crimped state of the contact device (100, 300), a crimp slit (109, 309) is formed in a substantially light-tight manner between crimp flanks (110, 120; 310, 320; 330, 340), related to one another, in the axial direction (Ax) of the contact device (100, 300), and/or
• in the crimped state of the contact device (100, 300), the crimp slit (109, 309) is extension-free only in a circumferential direction (Um) of the contact device (100, 300).

4. The electrical contact device (100) according to any one of the preceding claims, **characterised in that** the contact device (100) is formed as a ferrule (100), wherein:
• the ferrule (100) is substantially constituted as one single crimping section (100, 103) which can be provided at/on the cable (50),
• the crimping section (103) is installed, at/on the cable (50), in the crimped state as a closed and, in substantially all cross-sections, oval crimping section (103; 301, 303),
• substantially an entire longitudinal extension (Ax) of the ferrule (100) can be provided at/on the cable (50) in an axial direction (Ax) of the cable (50),
• the ferrule (100) possesses constant inner diameters in the crimped state in an axial plane (Ax), and/or
• the ferrule (100) has one single crimp flank (110, 120) at a longitudinal side (Ax).

5. The electrical contact device (300) according to any one of the preceding claims, **characterised in that** the contact device (300) is formed as a shield contact sleeve (300), wherein:
• the shield contact sleeve (300) has an insulating crimping section (301) and/or an outer conductor crimping section (303) and a shield contact section (305),
• the insulating crimping section (301) and/or the outer conductor crimping section (303) is installed, at/on the cable (50), in the crimped state as a closed and, in substantially all cross-sections, oval crimping section (301, 303),
• the outer conductor crimping section (303) is formed oval in substantially all cross-sections,
• a crimp slit (309) of the shield contact sleeve (300) begins at/in the outer conductor crimping section (303), and/or
• the open insulating crimping section (301) and/or the open outer conductor crimping section (303) is formed as one single gaping insulating crimping section (301) and/or outer conductor crimping section (303).

6. An electrical connecting unit (10), in particular twin-axial connecting unit (10), for an electrical cable (50), in particular a twin-axial cable (50), for the automotive industry, **characterised in that**
the connecting unit (10) comprises or has at least one electrical contact device (100, 300), in particular a ferrule (100) and/or a shield contact sleeve (300), according to any one of the preceding claims.

7. The electrical connecting unit (10) according to the preceding claim, **characterised in that**, in a crimped state of the connecting unit (10),
the crimp slits (109, 309) of two contact devices (100, 300) of the connecting unit (10) are arranged offset from one another in the circumferential direction (Um) of the connecting unit (10), and/or
the crimp slits (109, 309) of two contact devices (100, 300) of the connecting unit (10) are arranged substantially without overlap in the radial direction (Ra) of the connecting unit (10).

8. An electrical connector (1), in particular a mini connector (1), for an electrical cable (50), in particular a twin-axial cable (50), for the automotive industry, having a connector housing (20), **characterised in that**
the connector (1) has an electrical contact device (100, 300) or an electrical connecting unit (10) according to any one of the preceding claims.

9. A method for assembling an electrical cable (50), in particular a twin-axial cable (50), for the automotive industry, wherein
when assembling the cable (50), an open crimping section (103; 301, 303) of an electrical contact device (100, 300) or an electrical connecting unit (10) at/on the cable (50) is transformed into a closed crimping section (103; 301, 303) at/on the cable (50), **characterised in that**
when transforming the open crimping section (103; 301, 303) into the closed crimping section (103; 301, 303), a crimping section (103; 301, 303) which is oval in cross-sections and closed is installed at/on the cable (50).

10. The assembly method according to the preceding claim, **characterised in that**:
• preferably in a first step (I) of the method, a ferrule (100) which is oval in cross-sections is electromechanically fixed on an electrical outer conductor (522),
• preferably in a second step (II) of the method temporally following the first step (I), at least one terminal (200, 200) is electromechanically fixed at at least one electrical inner conductor (501, 502) of the cable (50),
• preferably in a third step (III) of the method temporally following the second step (II), a shield contact sleeve (300) is mechanically and/or electromechanically fixed at/on the cable (50), and/or
• in the third step (III) of the method, an insulating crimping section (301), which is oval in preferably substantially all cross-sections, and/or an outer conductor crimping section (303), which is oval in preferably substantially all cross-sections, of the shield contact sleeve (300) is formed.

11. The assembly method according to any one of the preceding claims, **characterised in that**:
• a crimp slit (109) of the oval ferrule (100) and a crimp slit (309) of the oval outer conductor crimping section (303) are arranged offset from one another in the circumferential direction (Um) of the connecting unit (10),
• the crimp slit (109) of the oval ferrule (100) and the crimp slit (309) of the oval outer conductor crimping section (303) are arranged offset from one another by approximately 90° or approximately 180°, and/or
• the contact device (100, 300) or the connecting unit (10) is formed according to any one of the preceding claims.

12. An assembled electrical cable (5), in particular assembled twin-axial cable (50), for the automotive industry, having an electrical cable (50) and an electrical connecting unit (10) at least partially joined thereto, **characterised in that**
an oval ferrule (100) of the connecting unit (10) is fixedly connected to an electrical outer conductor (522) of the cable (50) in an electromechanical manner, and a shield contact sleeve (300) of the connecting unit (10) is fixedly connected to the cable (50) in a mechanical and/or electromechanical manner by means of an oval crimping section (301, 303).

13. The assembled electrical cable (5) according to any one of the preceding claims, **characterised in that**:
• the assembled cable (5) is formed as a pre-assembled cable (5),
• a shield contact sleeve (300) is associated with the pre-assembled cable (5),
• the connecting unit (10) or a contact device (100, 300) of the connecting unit (10) is formed according to any one of the preceding claims, and/or
• the assembled cable (5) is produced by an assembly method according to any one of the preceding claims.

14. A unit, module, appliance, apparatus, installation or system, in particular for the automotive industry, **characterised in that**
the unit, the module, the appliance, the apparatus, the installation or the system has an electrical contact device (100, 300), an electrical connecting unit (10), an electrical connector (1) and/or an assembled electrical cable (5) according to any one of the preceding claims, and/or
the unit, the module, the appliance, the apparatus, the installation or the system has an assembled electrical cable (5) which is produced by an assembly method according to any one of the preceding claims.
